# EUROPEAN PATENT APPLICATION

(11) **EP 3 896 987 A1**
(43) Date of publication of application: **20.10.2021**
(21) Application number: 20900687.3
(22) Date of filing: 01.12.2020
(51) Int. Cl.: H04N 21/472

(54) **VIDEO PLAYBACK METHOD AND APPARATUS, ELECTRONIC DEVICE, AND STORAGE MEDIUM**

(30) Priority: 28.02.2020 CN 202010131231
(71) Applicant: BEIJING BAIDU NETCOM SCIENCE AND TECHNOLOGY CO. LTD., 100085 Beijing (CN)
(72) Inventor: ZHANG, Mingyue, Beijing 100085 (CN); ZHAO, Jinxin, Beijing 100085 (CN); GUO, Guanghui, Beijing 100085 (CN)
(74) Representative: Zimmermann, Tankred Klaus
(86) International application number: PCT/CN2020/133006
(87) International publication number: WO 2021/169458

(57) **Abstract**

The present disclosure provides a method and apparatus of playing a video, an electronic device, and a storage medium, which relates to a field of video processing. The method may include: distinguishing a content of interest and a content of no interest in the video according to tag information added to the video, wherein the tag information contains tag information added to the video subsequent to recognizing the content of interest and the content of no interest in the video by a machine model pre-trained; and playing the content of interest and the content of no interest at different playing speeds, wherein a playing speed for the content of interest is greater than that for the content of no interest. The solutions of the present disclosure may simplify a user's operation and help a user to quickly extract a content of interest.

## Description

### CROSS REFERENCE TO RELATED APPLICATION(S)

This application claims priority to Chinese patent Application No. 2020101312311 entitled "METHOD AND APPARATUS OF PLAYING VIDEO, ELECTRONIC DEVICE, AND STORAGE MEDIUM", filed on February 28, 2020, the content of which are incorporated herein by reference in their entirety.

### TECHNICAL FIELD

The present disclosure relates to computer application technology, and in particular to a method and apparatus of playing a video, an electronic device and a storage medium in a field of video processing.

### BACKGROUND

With an advent of 5G era, videos may occupy more and more communication channels. When watching a video, a user may adjust a playing speed for the video by clicking or dragging a progress bar.

However, in this way, the user may need to operate frequently, which increases a complexity of user's implementation. Moreover, unwatched content is unknown to the user in most cases, and the user may only blindly drag the progress bar to find a content of interest. This is likely to miss the content of interest and affect an acquisition of the content of interest.

### SUMMARY

In view of this, the present disclosure provides a method and apparatus of playing a video, an electronic device and a storage medium

There is provided a method of playing the video, including:
recognizing a content of interest and a content of no interest in the video by using a machine model pre-trained, and adding tag information to the video according to a result of recognition;
transmitting the video added with the tag information to a terminal device requesting the video, so that the content of interest and the content of no interest in the video are distinguished according to the tag information when the video is played on the terminal device; and
playing the content of interest and the content of no interest at different playing speeds, wherein a playing speed for the content of no interest is greater than that for the content of interest.

According to a preferred embodiment of the present disclosure, the method further includes: acquiring a training sample, wherein the training sample contains a sample video and a time when a user watching the sample video performs an interactive behavior for the sample video; and training the machine model according to the training sample.

According to a preferred embodiment of the present disclosure, the method further includes: prior to recognizing the content of interest and the content of no interest in the video by using the machine model pre-trained, determining whether the tag information is added by a creator to the video or not when the video is made by the creator; and recognizing the content of interest and the content of no interest in the video by using the machine model pre-trained, in response to determining that the tag information is not added by the creator to the video when the video is made by the creator.

According to a preferred embodiment of the present disclosure, the method further includes: providing the terminal device with different playing speeds set by the creator for the content of interest and the content of no interest when the video is made by the creator, so that the content of interest and the content of no interest are played on the terminal device at the different playing speeds set by the creator.

According to a preferred embodiment of the present disclosure, the training the machine model according to the training sample includes: training a common machine model for different types of videos; or training different machine models respectively for different types of videos.

There is provided a method of playing a video, including:
distinguishing a content of interest and a content of no interest in the video according to tag information added to the video, wherein the tag information contains tag information added subsequent to recognizing the content of interest and the content of no interest in the video by a machine model pre-trained; and
playing the content of interest and the content of no interest at different playing speeds, wherein a playing speed for the content of no interest is greater than that for the content of interest.

According to a preferred embodiment of the present disclosure, the machine model is trained according to a training sample, and the training sample contains a sample video and a time when a user watching the sample video performs an interactive behavior for the sample video.

According to a preferred embodiment of the present disclosure, the tag information contains tag information set at a start position and an end position of the content of interest, or tag information set at a start position and an end position of the content of no interest.

According to a preferred embodiment of the present disclosure, the tag information further contains tag information added by a creator to the video when the video is made by the creator.

According to a preferred embodiment of the present disclosure, the playing the content of interest and the content of no interest at different playing speeds further comprises: playing the content of interest and the content of no interest at different playing speeds set by the creator for the content of interest and the content of no interest when the video is made by the creator; or playing the content of interest and the content of no interest at different playing speeds pre-set for the content of interest and the content of no interest by a user watching the video.

There is provided an apparatus of processing a video, including a video processing unit configured to: recognize a content of interest and a content of no interest in the video by using a machine model pre-trained, and add tag information to the video according to a result of recognition; transmit the video added with the tag information to a terminal device requesting the video, so that the content of interest and the content of no interest in the video are distinguished according to the tag information when the video is played on the terminal device; and play the content of interest and the content of no interest at different playing speeds, wherein a playing speed for the content of no interest is greater than that for the content of interest.

According to a preferred embodiment of the present disclosure, the apparatus further includes a pre-processing unit configured to: acquire a training sample, wherein the training sample contains a sample video and a time when a user watching the sample video performs an interactive behavior for the sample video; and train the machine model according to the training sample.

According to a preferred embodiment of the present disclosure, the video processing unit is further configured to: prior to recognizing the content of interest and the content of no interest in the video by using the machine model pre-trained, determine whether the tag information is added by a creator to the video or not when the video is made by the creator; and recognize the content of interest and the content of no interest in the video by using the machine model pre-trained, in response to determining that the tag information is not added by the creator to the video when the video is made by the creator.

According to a preferred embodiment of the present disclosure, the video processing unit is further configured to: provide the terminal device with different playing speeds set by the creator for the content of interest and the content of no interest when the video is made by the creator, so that the content of interest and the content of no interest are played on the terminal device at the different playing speeds set by the creator.

According to a preferred embodiment of the present disclosure, the pre-processing unit is further configured to: train a common machine model for different types of videos; or train different machine models respectively for different types of videos.

There is further provided an apparatus of playing a video, including:
a content distinguishing unit configured to: distinguish a content of interest and a content of no interest in the video according to tag information added to the video, wherein the tag information contains tag information added to the video subsequent to recognizing the content of interest and the content of no interest in the video by a machine model pre-trained; and
a content playing unit configured to play the content of interest and the content of no interest at different playing speeds, wherein a playing speed for the content of no interest is greater than that for the content of interest.

According to a preferred embodiment of the present disclosure, the machine model is trained according to a training sample, and the training sample contains a sample video and a time when a user watching the sample video performs an interactive behavior for the sample video.

According to a preferred embodiment of the present disclosure, the tag information contains: tag information set at a start position and an end position of the content of interest, or tag information set at a start position and an end position of the content of no interest.

According to a preferred embodiment of the present disclosure, the tag information further contains tag information added by a creator to the video when the video is made by the creator.

According to a preferred embodiment of the present disclosure, the content playing unit is further configured to play the content of interest and the content of no interest at different playing speeds set by the creator for the content of interest and the content of no interest when the video is made by the creator; or play the content of interest and the content of no interest at different playing speeds pre-set for the content of interest and the content of no interest by a user watching the video.

There is further provided an electronic device, including:
at least one processor; and
a memory communicatively connected to the at least one processor, wherein the memory stores instructions executable by the at least one processor, and the instructions, when executed by the at least one processor, cause the at least one processor to implement the method described above.

There is further provided a non-transitory computer-readable storage medium having computer instructions stored thereon, wherein the computer instructions, when executed by a computer, cause the computer to implement the method described above.

The embodiments of the present disclosure have following advantages or beneficial effects. The content of interest and the content of no interest in the video may be automatically distinguished according to the tag information added to the video, and may be played at different playing speeds, so that the user does not need to operate the progress bar. In this way, the user's operation is simplified, and the content of interest may not be missed. By automatically adjusting the playing speed for the video, the user may extract the content of interest quickly, and a time cost of user to acquire the content of interest is reduced. In addition, there is no need to change the video greatly. It is only needed to add the tag information to the video, so that an original content of the video is retained, and the watching experience is not affected. The tag information may be added manually or by machine, and the playing speed may be set by the creator of the video or by the user watching the video, which is not limited to a specific way and which is very flexible and convenient in implementation. Other effects of the alternative methods above may be described below in combination with specific embodiments.

### BRIEF DESCRIPTION OF THE DRAWINGS

The drawings are used to better understand the solution and do not constitute a limitation to the present disclosure.
FIG. 1 shows a flowchart of a method of playing a video according to a first embodiment of the present disclosure.
FIG. 2 shows a flowchart of a method of playing a video according to a second embodiment of the present disclosure.
FIG. 3 shows a schematic diagram of an overall implementation process of a method of playing a video according to the present disclosure.
FIG. 4 shows a schematic diagram of a comparison of a playing duration for the video before and after the playing speed for the video is automatically adjusted according to the present disclosure.
FIG. 5 shows a schematic diagram of a composition structure of an apparatus of processing a video according to the present disclosure.
FIG. 6 shows a schematic diagram of a composition structure of an apparatus of playing a video according to the present disclosure.
FIG. 7 shows a block diagram of an electronic device for implementing the method described according to the embodiments of the present disclosure.

### DETAILED DESCRIPTION OF EMBODIMENTS

The exemplary embodiments of the present disclosure are described below with reference to the drawings, which include various details of the embodiments of the present disclosure to facilitate understanding, and which should be considered as merely illustrative. Therefore, those ordinary skilled in the art should realize that various changes and modifications may be made to the embodiments described herein without departing from the scope and spirit of the present disclosure. In addition, for clarity and conciseness, descriptions of well-known functions and structures are omitted in the following description.

In addition, it should be understood that the term "and/or" herein only describes an association relationship of associated objects, which means that there may be three relationships. For example, A and/or B may refer to only A, only B, as well as A and B. In addition, a symbol "/" herein generally indicates an "or" relationship of associated objects.

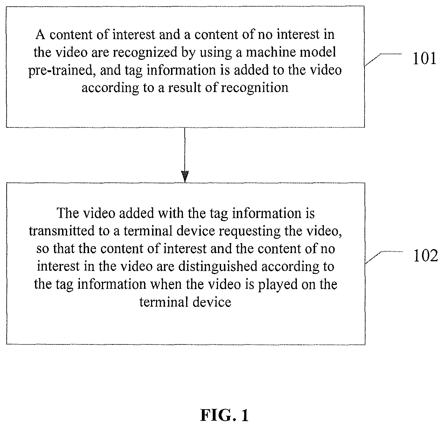

FIG. 1 shows a flowchart of a method of playing a video according to a first embodiment of the present disclosure. As shown in FIG. 1, the method includes following steps.

In step 101, a content of interest and a content of no interest in the video are recognized by using a machine model pre-trained, and tag information is added to the video according to a result of recognition.

In step 102, the video added with the tag information is transmitted to a terminal device requesting the video, so that the content of interest and the content of no interest in the video are distinguished according to the tag information when the video is played on the terminal device. The content of interest and the content of no interest are played at different playing speeds, and a playing speed for the content of no interest is greater than that for the content of interest.

In order to implement the solution described in the embodiments, the machine model may be pre-trained. The tag information is added to the video subsequent to recognizing the content of interest and the content of no interest in the video by the machine model. The machine model may be trained according to a training sample constructed. Each training sample may contain a sample video and a time when a user watching the sample video performs an interactive behavior for the sample video.

For example, for a short video, the time when the user gives "likes", calls up a comment window, posts a comment or shares the video during the watching process may be recorded. For another example, for a playback of a live stream, the time when the user watching the live stream gives a gift or interacts with a streamer in real time may be recorded. For another example, for a long video, the time when the user posts a bullet screen during the watching process may be recorded. The video content corresponding to these interactive behaviors is usually the content of interest.

How to train the machine model based on the training samples described above is the related art. The training process may be understood as making the machine model learn features of the content of interest, so as to distinguish the content of interest and the content of no interest according to the features.

In practical application, a common machine model may be trained for different types of videos, such as short video, long video, playback of live stream, etc. Accordingly, the training samples for the training may contain different types of sample videos. Alternatively, different machine models may be trained respectively for different types of videos. Accordingly, for any type of video, the training samples for the training may only contain this type of sample videos. In the latter case, each machine model generally has the same model structure.

In addition, the tag information may be added to the video by a creator when the video is made by the creator. Accordingly, prior to recognizing the content of interest and the content of no interest in the video by the machine model, it may be first determined whether the tag information is added by the creator to the video when the video is made by the creator. If not, the content of interest and the content of no interest in the video may be recognized by the machine model. Or if so, the tag information does not need to be added repeatedly. That is to say, the tag information may be added manually or by machine.

For the creator of the video, the content of interest and the content of no interest are known, and the tag information may be added to the video when the video is made.

In addition, the creator of the video may set different playing speeds for the content of interest and the content of no interest when the video is made. The different playing speeds set may be issued in a certain way when the video is requested, which is not specifically limited. Accordingly, in the process of playing the video, the content of interest and the content of no interest may be played at the different playing speeds set. Alternatively, the content of interest and the content of no interest may also be played at different playing speeds pre-set for the content of interest and the content of no interest by the user watching the video.

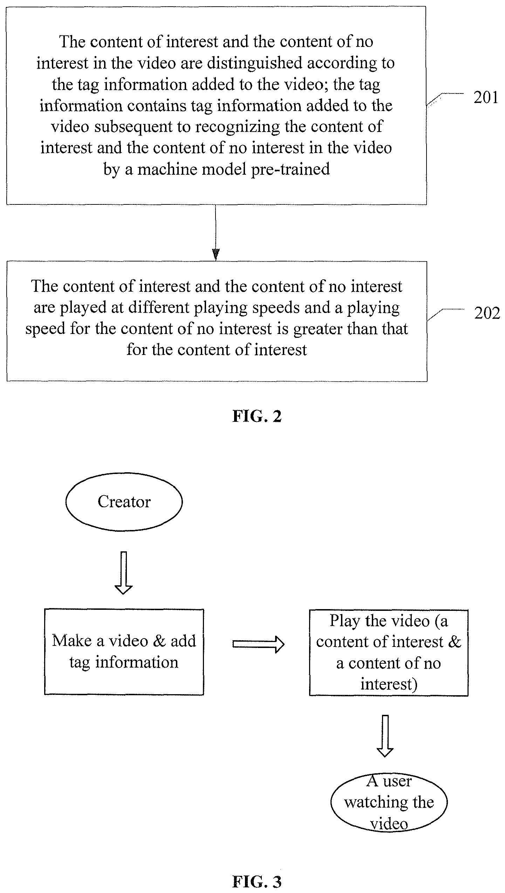

FIG. 2 shows a flowchart of a method of playing a video according to a second embodiment of the present disclosure. As shown in FIG. 2, the method includes following steps.

In step 201, the content of interest and the content of no interest in the video are distinguished according to the tag information added to the video. The tag information contains tag information added to the video subsequent to recognizing the content of interest and the content of no interest in the video by a machine model pre-trained.

In step 202, the content of interest and the content of no interest are played at different playing speeds. A playing speed for the content of no interest is greater than that for the content of interest.

In this embodiment, the playing speed for the video may be adjusted automatically, referred to as "focus on content of interest".

The tag information may be added to the video so that the content of interest and the content of no interest in the video are distinguished according to the tag information.

For example, the tag information may be set at a start position and an end position of the content of interest, or the tag information may be set at a start position and an end position of the content of no interest. The specific form of the tag information is not limited and may be determined according to the actual needs. For example, the tag information may be a specific identifier inserted, which is only used to distinguish the content of interest and the content of no interest and which does not change the content of the video.

For a video, it may contain only one content of interest, or it may contain a plurality of contents of interest. If the tag information is added at the start position and the end position of the content of interest, the content between the start position and the end position is the content of interest, and the rest of the video is the content of no interest. If the tag information is added at the start position and the end position of the content of no interest, the content between the start position and the end position is the content of no interest, and the rest of the video is the content of interest.

For example, if a total duration of a video is 8 minutes and the content at 3∼5 min is the content of interest, the tag information may be set respectively at 3 min and 5 min.

In addition, the tag information may be the tag information added to the video subsequent to recognizing the content of interest and the content of no interest in the video by the machine model pre-trained, or may be the tag information added by the creator to the video when the video is made by the creator. The tag information may be added manually or by machine.

For the creator of the video, the content of interest and the content of no interest are known, and the tag information may be added to the video when the video is made.

Alternatively, the machine model may be pre-trained, and the tag information may be added to the video subsequent to recognizing the content of interest and the content of no interest in the video by the machine model. The machine model may be trained according to a training sample constructed. Each training sample may contain a sample video and a time when a user watching the sample video performs an interactive behavior for the sample video.

For example, for a short video, the time when the user gives "likes", calls up a comment window, posts a comment or shares the video during the watching process may be recorded. For another example, for a playback of a live stream, the time when the user watching the live stream gives a gift or interacts with a streamer in real time may be recorded. For another example, for a long video, the time when the user posts a bullet screen during the watching process may be recorded. The video content corresponding to these interactive behaviors is usually the content of interest.

How to train the machine model based on the training samples described above is the related art. The training process may be understood as making the machine model learn the features of the content of interest, so as to distinguish the content of interest and the content of no interest according to the features.

In practical application, a common machine model may be trained for different types of videos, such as short video, long video, playback of live stream, etc. Accordingly, the training samples for the training may contain different types of sample videos. Alternatively, different machine models may be trained respectively for different types of videos. Accordingly, for any type of video, the training samples for the training may only contain this type of sample videos. In the latter case, each machine model generally has the same model structure.

The content of interest and the content of no interest may be played at different playing speeds. The playing speed for the content of no interest may be greater than that for the content of interest. For example, the content of interest may be played at a normal speed, i.e. 1 time speed, and the content of no interest may be played at 1.5 or 2 times speed.

Prior to watching the video, the user may first make a choice, such as whether to "focus on content of interest". For example, a button may be displayed at a certain position of a video interface, and the user may choose to turn it on or off. If the button is turned on, it means a selection of "focus on content of interest". Accordingly, the content of interest and the content of no interest may be played at different playing speeds. If the button is turned off, it means that "focus on content of interest" is not required. Accordingly, the entire video may be played in a traditional playback mode, that is, at 1 time speed.

The content of interest and the content of no interest may be played at the different playing speeds set by the creator when the video is made. The different playing speeds set may be issued in a certain way when the video is requested by the user, which is not specifically limited. Accordingly, in the process of playing the video, the content of interest and the content of no interest may be played at the different playing speeds set. Alternatively, the content of interest and the content of no interest may also be played at different playing speeds pre-set for the content of interest and the content of no interest by the user watching the video.

Based on the description above, FIG. 3 shows a schematic diagram of an overall implementation process of the method of playing the video according to the present disclosure. As shown in FIG. 3, assuming that the tag information is added manually, then, when the video is made by the creator, the creator may add the tag information, for example, at the start position and the end position of the content of interest. When the video is played, the content of interest and the content of no interest in the video may be distinguished according to the tag information set and may be played at different speeds pre-set by the user watching the video. For example, the content of interest may be played at 1 time speed, and the content of no interest may be played at 1.5 times speed. Accordingly, the user may watch the video content that is played at an automatically adjusted speed.

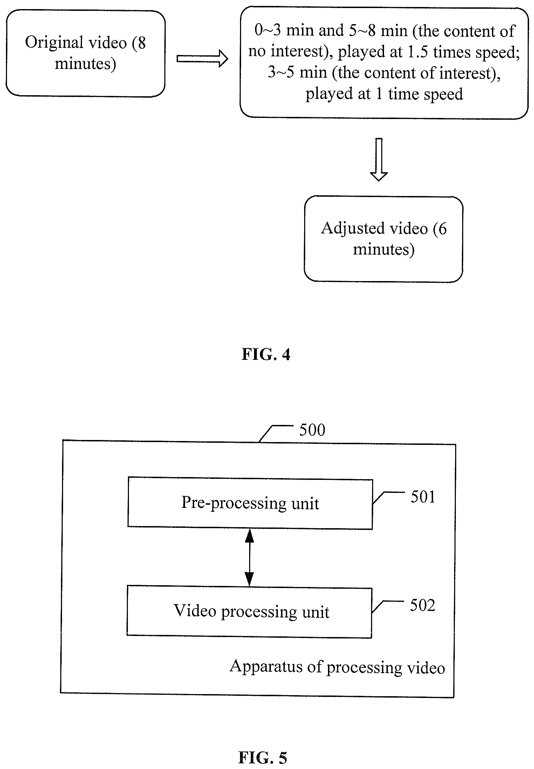

FIG. 4 shows a schematic diagram of a comparison of a playing duration for the video before and after the playing speed for the video is automatically adjusted according to the present disclosure. As shown in FIG. 4, if a total duration of a video is 8 minutes and the content at 3∼5 min is the content of interest, then the content of no interest at 0∼3 min and the content of no interest at 5∼8 min may be played at 1.5 times speed (the two contents of no interest may also be played at different playing speeds if necessary), and the content of interest at 3-5 min is played at 1 time speed. In this way, the video of 8 minutes may be played for only 6 minutes.

It should be noted that for the sake of description, the method embodiments described above are all expressed as a series of actions, but those skilled in the art should know that the present disclosure is not limited by the described sequence of actions. According to the present disclosure, some steps may be performed in other order or simultaneously. Those skilled in the art should also know that the embodiments described in the specification are all preferred embodiments, and the involved actions and modules are not necessarily required by the present disclosure.

In summary, by using the solutions described in the method embodiments of the present disclosure, the content of interest and the content of no interest in the video may be automatically distinguished according to the tag information set, and may be played at different playing speeds, so that the user does not need to operate the progress bar. In this way, the user's operation is simplified, and the content of interest may not be missed. By automatically adjusting the playing speed for the video, the user may extract the content of interest quickly, and the time cost of the user to acquire the content of interest is reduced. In addition, there is no need to change the video greatly. It is only needed to add the tag information to the video, so that an original content of the video is retained, and the watching experience is not affected. The tag information may be added manually or by machine, and the playing speed may be set by the creator of the video or by the user watching the video, which is not limited to a specific way and which is very flexible and convenient in implementation.

The above is the description of the method embodiments. The solution of the present application is further described below by apparatus embodiments.

FIG. 5 shows a schematic diagram of a composition structure of an apparatus 500 of processing a video according to the present disclosure. As shown in FIG. 5, the apparatus 500 includes a video processing unit 502 and a pre-processing unit 501.

The pre-processing unit 501 is used to acquire a training sample. The training sample contains a sample video and a time when a user watching the sample video performs an interactive behavior for the sample video. The machine model is trained according to the training sample.

The video processing unit 502 is used to: recognize a content of interest and a content of no interest in the video by using a machine model pre-trained, and add tag information to the video according to a result of recognition; transmit the video added with the tag information to a terminal device requesting the video, so that the content of interest and the content of no interest in the video are distinguished according to the tag information when the video is played on the terminal device; and play the content of interest and the content of no interest at different playing speeds. The playing speed for the content of no interest is greater than that for the content of interest.

The video processing unit 502 is further used to: determine whether the tag information is added by a creator to the video or not when the video is made by the creator, prior to recognizing the content of interest and the content of no interest in the video by using the machine model pre-trained; and recognize the content of interest and the content of no interest in the video by using the machine model pre-trained, in response to determining that the tag information is not added by the creator to the video when the video is made by the creator.

In addition, the video processing unit 502 is further used to provide the terminal device with different playing speeds set by the creator for the content of interest and the content of no interest when the video is made by the creator, so that the content of interest and the content of no interest are played on the terminal device at the different playing speeds set by the creator.

Furthermore, the pre-processing unit 501 may train a common machine model for different types of videos, or train different machine models respectively for different types of videos.

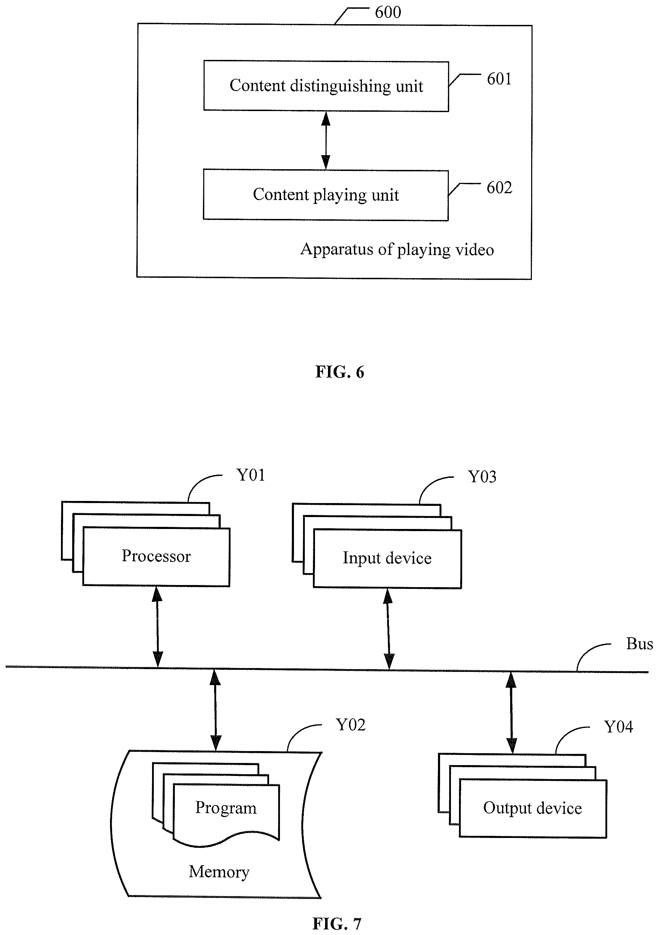

FIG. 6 shows a schematic diagram of a composition structure of an apparatus 600 of playing a video according to the present disclosure. As shown in FIG. 6, the apparatus 600 includes a content distinguishing unit 601 and a content playing unit 602.

The content distinguishing unit 601 is used to distinguish the content of interest and the content of no interest in the video according to the tag information added to the video. The tag information contains tag information added to the video subsequent to recognizing the content of interest and the content of no interest in the video by a machine model pre-trained.

The content playing unit 602 is used to play the content of interest and the content of no interest at different playing speeds. The playing speed for the content of no interest is greater than that for the content of interest.

For example, the tag information may be set at a start position and an end position of the content of interest, or the tag information may be set at a start position and an end position of the content of no interest. The specific form of the tag information is not limited and may be determined according to the actual needs.

For a video, it may contain only one content of interest, or it may contain a plurality of contents of interest. If the tag information is added to the video at the start position and the end position of the content of interest, the content between the start position and the end position is the content of interest, and the rest of the video is the content of no interest. If the tag information is added to the video at the start position and the end position of the content of no interest, the content between the start position and the end position is the content of no interest, and the rest of the video is the content of interest.

In addition, as described above, the tag information may be the tag information added to the video subsequent to recognizing the content of interest and the content of no interest in the video by the machine model pre-trained, or may be the tag information added by the creator to the video when the video is made. That is to say, the tag information may be added manually or by machine.

The machine model may be trained according to a training sample constructed. Each training sample may contain a sample video and a time when a user watching the sample video performs an interactive behavior for the sample video.

In practical application, a common machine model may be trained for different types of videos, such as short video, long video, playback of live stream, etc. Accordingly, the training samples for the training may contain different types of sample videos. Alternatively, different machine models may be trained respectively for different types of videos. Accordingly, for any type of video, the training samples for the training may only contain this type of sample videos. In the latter case, each machine model generally has the same model structure.

The content playing unit 602 may play the content of interest and the content of no interest at different playing speeds. The playing speed for the content of no interest is greater than that for the content of interest. For example, the content of interest may be played at a normal speed, i.e. 1 time speed, and the content of no interest may be played at 1.5 or 2 times speed.

Specifically, the content playing unit 602 may play the content of interest and the content of no interest at different playing speeds set by the creator for the content of interest and the content of no interest when the video is made by the creator. Alternatively, the content playing unit 602 may play the content of interest and the content of no interest at different playing speeds pre-set for the content of interest and the content of no interest by the user watching the video.

For the specific work flow of the apparatus embodiments shown in FIG. 5 and FIG. 6, reference may be made to the relevant description in the method embodiments described above, which will not be repeated here.

In summary, by using the solutions described in the apparatus embodiments of the present disclosure, the content of interest and the content of no interest in the video may be automatically distinguished according to the tag information set, and may be played at different playing speeds, so that the user does not need to operate the progress bar. In this way, the user's operation is simplified, and the content of interest may not be missed. By automatically adjusting the playing speed for the video, the user may extract the content of interest quickly, and the time cost of the user to acquire the content of interest is reduced. In addition, there is no need to change the video greatly. It is only needed to add the tag information to the video, so that an original content of the video is retained, and the watching experience is not affected. The tag information may be added manually or by machine, and the playing speed may be set by the creator of the video or by the user watching the video, which is not limited to a specific way and which is very flexible and convenient in implementation.

According to the embodiments of the present disclosure, the present disclosure further provides an electronic device and a readable storage medium.

FIG. 7 shows a block diagram of an electronic device according to the embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 7, the electronic device may include one or more processors Y01, a memory Y02, and interface(s) for connecting various components, including high-speed interface(s) and low-speed interface(s). The various components are connected to each other by using different buses, and may be installed on a common motherboard or installed in other manners as required. The processor may process instructions executed in the electronic apparatus, including instructions stored in or on the memory to display graphical information of GUI (Graphical User Interface) on an external input/output device (such as a display device coupled to an interface). In other embodiments, a plurality of processors and/or a plurality of buses may be used with a plurality of memories, if necessary. Similarly, a plurality of electronic apparatuses may be connected in such a manner that each apparatus providing a part of necessary operations (for example, as a server array, a group of blade servers, or a multi-processor system). In FIG. 7, a processor Y01 is illustrated by way of example.

The memory Y02 is a non-transitory computer-readable storage medium provided by the present disclosure. The memory stores instructions executable by at least one processor, to cause the at least one processor to perform the method of establishing the similarity model provided in the present disclosure. The non-transitory computer-readable storage medium of the present disclosure stores computer instructions for allowing a computer to execute the method of establishing the similarity model provided in the present disclosure.

The memory Y02, as a non-transitory computer-readable storage medium, may be used to store non-transitory software programs, non-transitory computer-executable programs and modules, such as program instructions/modules corresponding to the method of establishing the similarity model in the embodiments of the present disclosure. The processor Y01 executes various functional applications and data processing of the server by executing the non-transient software programs, instructions and modules stored in the memory 702, thereby implementing the method of establishing the similarity model in the embodiments of the method mentioned above.

The memory Y02 may include a program storage area and a data storage area. The program storage area may store an operating system and an application program required by at least one function. The data storage area may store data etc. generated by using the electronic device. In addition, the memory Y02 may include a high-speed random access memory, and may further include a non-transitory memory, such as at least one magnetic disk storage device, a flash memory device, or other non-transitory solid-state storage devices. In some embodiments, the memory Y02 may optionally include a memory provided remotely with respect to the processor Y01, and such remote memory may be connected through a network to the electronic device. Examples of the above-mentioned network include, but are not limited to the Internet, intranet, local area network, mobile communication network, and combination thereof.

The electronic device may further include an input device Y03 and an output device Y04. The processor Y01, the memory Y02, the input device Y03 and the output device Y04 may be connected by a bus or in other manners. In FIG. 7, the connection by a bus is illustrated by way of example.

The input device Y03 may receive input information of numbers or character, and generate key input signals related to user settings and function control of the electronic device, such as a touch screen, a keypad, a mouse, a track pad, a touchpad, a pointing stick, one or more mouse buttons, a trackball, a joystick, and so on. The output device Y04 may include a display device, an auxiliary lighting device (for example, LED), a tactile feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in a digital electronic circuit system, an integrated circuit system, an application specific integrated circuit (ASIC), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

These computing programs (also referred as programs, software, software applications, or codes) include machine instructions for a programmable processor, and may be implemented using high-level programming languages, object-oriented programming languages, and/or assembly/machine languages. As used herein, the terms "machine-readable medium" and "computer-readable medium" refer to any computer program product, apparatus and/or device (for example, magnetic disk, optical disk, memory, programmable logic device (PLD)) for providing machine instructions and/or data to a programmable processor, including a machine-readable medium for receiving machine instructions as machine-readable signals. The term "machine-readable signal" refers to any signal for providing machine instructions and/or data to a programmable processor.

In order to provide interaction with the user, the systems and technologies described here may be implemented on a computer including a display device (for example, a CRT (cathode ray tube) or LCD (liquid crystal display) monitor) for displaying information to the user), and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

The computer system may include a client and a server. The client and the server are generally far away from each other and usually interact through a communication network. The relationship between the client and the server is generated through computer programs running on the corresponding computers and having a client-server relationship with each other.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the protection scope of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method of playing a video, comprising:
recognizing a content of interest and a content of no interest in a video by using a machine model pre-trained, and adding tag information to the video according to a result of recognition;
transmitting the video added with the tag information to a terminal device requesting the video, so that the content of interest and the content of no interest in the video are distinguished according to the tag information when the video is played on the terminal device; and
playing the content of interest and the content of no interest at different playing speeds, wherein a playing speed for the content of no interest is greater than that for the content of interest.

2. The method of claim 1, further comprising:
acquiring a training sample, wherein the training sample contains a sample video and a time when a user watching the sample video performs an interactive behavior for the sample video; and
training the machine model according to the training sample.

3. The method of claim 1, further comprising: prior to recognizing the content of interest and the content of no interest in the video by using the machine model pre-trained,
determining whether the tag information is added by a creator to the video or not when the video is made by the creator; and
recognizing the content of interest and the content of no interest in the video by using the machine model pre-trained, in response to determining that the tag information is not added by the creator to the video when the video is made by the creator.

4. The method of claim 1, further comprising:
providing the terminal device with different playing speeds set by the creator for the content of interest and the content of no interest when the video is made by the creator, so that the content of interest and the content of no interest are played on the terminal device at the different playing speeds set by the creator.

5. The method of claim 2, wherein the training the machine model according to the training sample comprises:
training a common machine model for different types of videos; or
training different machine models respectively for different types of videos.

6. A method of playing a video, comprising:
distinguishing a content of interest and a content of no interest in the video according to tag information added to the video, wherein the tag information contains tag information added to the video subsequent to recognizing the content of interest and the content of no interest in the video by a machine model pre-trained; and
playing the content of interest and the content of no interest at different playing speeds, wherein a playing speed for the content of no interest is greater than that for the content of interest.

7. The method of claim 6, wherein the machine model is trained according to a training sample, and the training sample contains a sample video and a time when a user watching the sample video performs an interactive behavior for the sample video.

8. The method of claim 6, wherein the tag information contains: tag information set at a start position and an end position of the content interest, or tag information set at a start position and an end position of the content of no interest.

9. The method of claim 6, wherein the tag information further contains tag information added by a creator to the video when the video is made by the creator.

10. The method of claim 6, wherein the playing the content of interest and the content of no interest at different playing speeds further comprises:
playing the content of interest and the content of no interest at different playing speeds set by the creator for the content of interest and the content of no interest when the video is made by the creator; or
playing the content of interest and the content of no interest at different playing speeds pre-set for the content of interest and the content of no interest by a user watching the video.

11. An apparatus of processing a video, comprising a video processing unit configured to:
recognize a content of interest and a content of no interest in the video by using a machine model pre-trained, and add tag information to the video according to a result of recognition;
transmit the video added with the tag information to a terminal device requesting the video, so that the content of interest and the content of no interest in the video are distinguished according to the tag information when the video is played on the terminal device; and
play the content of interest and the content of no interest at different playing speeds, wherein a playing speed for the content of no interest is greater than that for the content of interest.

12. The apparatus of claim 11, further comprising a pre-processing unit configured to:
acquire a training sample, wherein the training sample contains a sample video and a time when a user watching the sample video performs an interactive behavior for the sample video; and
train the machine model according to the training sample.

13. The apparatus of claim 11, wherein the video processing unit is further configured to: prior to recognizing the content of interest and the content of no interest in the video by using the machine model pre-trained,
determine whether the tag information is added by a creator to the video or not when the video is made by the creator; and
recognize the content of interest and the content of no interest in the video by using the machine model pre-trained, in response to determining that the tag information is not added by the creator to the video when the video is made by the creator.

14. The apparatus of claim 11, wherein the video processing unit is further configured to: provide the terminal device with different playing speeds set by the creator for the content of interest and the content of no interest when the video is made by the creator, so that the content of interest and the content of no interest are played on the terminal device at the different playing speeds.

15. The apparatus of claim 12, wherein the pre-processing unit is further configured to:
train a common machine model for different types of videos; or
train different machine models respectively for different types of videos.

16. An apparatus of playing a video, comprising:
a content distinguishing unit configured to: distinguish a content of interest and a content of no interest in the video according to tag information added to the video, wherein the tag information contains tag information added to the video subsequent to recognizing the content of interest and the content of no interest in the video by a machine model pre-trained; and
a content playing unit configured to play the content of interest and the content of no interest at different playing speeds, wherein a playing speed for the content of no interest is greater than that for the content of interest.

17. The apparatus of claim 16, wherein the machine model is trained according to a training sample, and the training sample contains a sample video and a time when a user watching the sample video performs an interactive behavior for the sample video.

18. The apparatus of claim 16, wherein the tag information contains tag information set at a start position and an end position of the content of interest, or tag information set at a start position and an end position of the content of no interest.

19. The apparatus of claim 16, wherein the tag information further contains tag information added by a creator to the video when the video is made by the creator.

20. The apparatus of claim 16, wherein the content playing unit is further configured to:
play the content of interest and the content of no interest at different playing speeds set by the creator for the content of interest and the content of no interest when the video is made by the creator; or
play the content of interest and the content of no interest at different playing speeds pre-set for the content of interest and the content of no interest by a user watching the video.

21. An electronic device, comprising:
at least one processor; and
a memory communicatively connected to the at least one processor, wherein the memory stores instructions executable by the at least one processor, and the instructions, when executed by the at least one processor, cause the at least one processor to implement the method of any one of claims 1 to 10.

22. A non-transitory computer-readable storage medium having computer instructions stored thereon, wherein the computer instructions, when executed by a computer, cause the computer to implement the method of any one of claims 1 to 10.
